# EUROPEAN PATENT APPLICATION

(11) **EP 3 541 090 A1**
(43) Date of publication of application: **18.09.2019**
(21) Application number: 18162203.6
(22) Date of filing: 16.03.2018
(51) Int. Cl.: H04R 1/02, F16K 31/08, F16K 1/12, F16K 24/00, H04R 1/10, H04R 7/20, H04R 9/02, F16K 31/06

(54) **CONTROLLABLE MICRO ACOUSTIC VALVE**

(71) Applicant: Ole Wolff Elektronik A/S, 4180 Soro (DK)
(72) Inventor: ANDERSEN, Morten Kjeldsen, 8300 Odder (DK)
(74) Representative: Inspicos P/S

(57) **Abstract**

The present invention relates to a micro acoustic valve comprising a moveable first member, and a coil configured to bring the moveable first member in the vicinity of a second member in order to close the valve, or bring the moveable first member away from the second member in order to open the valve. The micro acoustic valve of the present invention is maintained in a closed state by magnetic forces between the moveable first member and the second member. The present invention further relates to a receiver comprising a moveable diaphragm having a permanent magnet secured thereto.

## Description

### FIELD OF THE INVENTION

The present invention relates to a controllable micro acoustic valve. Moreover, the present invention relates to a receiver including a controllable valve solution for adjusting the frequency response, said receiver being suitable for being used in connection with ear plugs for hearing devices and/or hearables.

### BACKGROUND OF THE INVENTION

In-the-ear audio devices of for example hearing devices or hearables may be configured to form an acoustic seal within the ear to enhance the acoustical performance of one or more of such audio devices - for example when listening to music. However, this seal can cause occlusion, which is the feeling of pressure building up in an ear canal and/or the perception of voices as being loud. In order to deal with this problem audio devices may be permanently vented which limits the effect of occlusion. However, permanent venting may influence the low frequency acoustic performance in a negative way.

In US 2017/0251292 A1 an audio device comprising a controllable acoustic valve has been suggested. The acoustic valve suggested in US 2017/0251292 A1 operates by introducing mechanical stress in so-called roll portions thereby blocking one or more sound passages with a moveable plug portion. The plug portion is moved by applying a current pulse to a moving coil secured to the moveable plug portion. The mechanical stress introduced to the roll portion maintains the moveable plug portion in a position that either blocks the one or more sound passages, or alternatively, allows air to pass through the one or more sound passages. Thus, the roll portions should be capable of toggling the plug portion between two positions - an open position and a closed position.

The acoustic valve suggested in US 2017/0251292 A1 is disadvantageous in that it requires a relative large amount of energy to introduce/overcome the mechanical stress level of the roll portion and thereby move the moveable plug portion from one position to another position. Moreover, the roll portions should be designed very accurately in order to ensure a stable and reliable operation of the acoustic valve suggested in US 2017/0251292.

It may thus be seen as an object of embodiments of the present invention to provide a controllable acoustic valve mechanism that may be operated using only a small amount of energy.

It may be seen as a further object of embodiments of the present invention to provide a receiver having an energy saving controllable acoustic valve mechanism.

### DESCRIPTION OF THE INVENTION

The above-mentioned objects are complied with by providing, in a first aspect, a micro acoustic valve comprising
1) a moveable first member, and
2) a coil configured to bring the moveable first member in the vicinity of a second member in order to close the valve, or bring the moveable first member away from the second member in order to open the valve,
wherein the valve is maintained in a closed state by magnetic forces between the moveable first member and the second member.

Thus, the present invention relates to a micro acoustic valve where magnetic forces are capable of keeping the valve in a closed position or state. This is advantageous from the power saving perspective in that no electrical power is required in order to keep the valve in a closed position or state. Similarly, it requires no electrical power to keep the valve in an open position or state.

The moveable first member may comprise a permanent magnet, such as a disc-shaped permanent magnet. The second member may comprise a soft iron material with which the permanent magnet may interact via magnetic forces.

The moveable first member may be suspended in a flexible member, such as a suspension member or a resilient spider. The flexible member may comprise an air passage where air is allowed to pass while the valve is in an open state. The air passage may be implemented in various ways, such as an opening in a resilient spider or an air permeable region in a suspension member. The air passage may be implemented in various ways, such as one or more openings being punched or being made with a laser.

In one embodiment the coil may be a moving coil forming part of the moveable first member in a manner so that one or more electric pulses applied to the coil may be capable of bringing the permanent magnet in the vicinity of a second member in order to close the valve, or bring the permanent magnet away from the second member in order to open the valve. In this embodiment the moveable first member may further comprise a bobbin secured to the permanent magnet, and wherein the moving coil may be positioned or wounded around at least part of said bobbin.

The flexible member may comprise a suspension member, wherein at least part of the suspension member may form an acoustic seal between moveable first member and the second member while the valve is in a closed state. The suspension member may be made of for example a foil or a moulded silicone structure. The acoustic seal may be provided by letting the suspension member being mechanically biased towards the second member due the magnetic forces between the permanent magnet and the second member.

The second member may forms part of a valve casing. The moveable first member may be configured to essentially block an opening in the valve casing when the micro acoustic valve is in a closed position.

The micro acoustic valve may further comprise an arrangement for generating a permanent magnetic field in which permanent magnetic field at least part of the moving coil is positioned. As addressed above an electric pulse applied to the moving coil may be capable of either closing the valve or opening the valve. The arrangement for generating the permanent magnetic field may comprise a surrounding, such as a substantially ring-shaped, permanent magnet positioned between a pair of surrounding, such as substantially ring-shaped, yokes.

The micro acoustic valve of the preceding claims may further comprise one or more air passages through the valve so that air is allowed to pass the valve when the valve is in an open state.

In another embodiment the coil may be a static coil arranged around at least part of a static centre yoke. The moveable first member may comprise a disc shaped magnet and a top disc yoke secured to a centre and thereby moveable portion of a resilient spider. The centre portion of the resilient spider is moveable due to an arrangement of openings and thereby one or more air passages in said spider. In this embodiment the second member may form part of the static centre yoke. The moveable first member may be configured to essentially block an opening in the static centre yoke when the micro acoustic valve is in a closed position.

The micro acoustic valve according to the present invention may have an outer diameter being smaller than 6 mm, such as smaller than 5 mm, such as smaller than 4 mm, such as around 3 mm, and a length being shorter than 6 mm, such as shorter than 5 mm, such as shorter than 4 mm, such as around 3 mm.

In a second aspect the present invention relates to a receiver comprising
1) a moveable diaphragm having a permanent magnet secured thereto or integrated therewith, and
2) a moving coil configured to bring at least part of the moveable diaphragm in the vicinity of a receiver casing in order to block a venting opening in the receiver casing, or bring at least part of the moveable diaphragm away from the receiver casing in order to allow air to pass through the venting opening in the receiver casing,
wherein the venting opening in the receiver casing is maintained in a blocked state by magnetic forces between the permanent magnet of the moveable diaphragm and the receiver casing.

The permanent magnet may be a disc-shaped permanent magnet. At least part of the moveable diaphragm may form an acoustic seal with the receiver casing while the venting opening in said receiver casing is blocked.

The receiver according to the second aspect may thus comprise a moveable diaphragm which is suspended in a suspension member. The moving coil may be secured to the moveable diaphragm and the suspension member in a manner so that the moving coil also extends into a permanent magnetic field being generated by a pair of yokes and a pair of permanent magnets. The sound output from the receiver may be via output ports on the back-side of the receiver. The receiver may comprise a frame structure through which one or more acoustic load channels are provided.

In an unblocked state the suspension member may move freely in response to electrical signals provided to the moving coil as there is no magnetic coupling between the moveable diaphragm and the receiver casing, i.e. no magnetic coupling between the disc-shaped permanent magnet secured to the moveable diaphragm and a soft iron receiver casing.

Similar to the first aspect the venting opening may be is blocked by applying an electric pulse of a certain amplitude, time period and polarity to the moving coil whereby the moveable diaphragm, including the disc-shaped permanent magnet, is moved in the direction of the receiver casing. The venting opening may be reopened by applying an electric pulse with a certain amplitude, time period and an opposite polarity to the moving coil.

When the venting opening is closed, the moveable diaphragm, including the disc-shaped permanent magnet may be magnetically coupled to the soft iron receiver casing. Moreover, the moveable diaphragm itself may form an acoustic seal to the soft iron receiver casing.

In a third aspect the present invention relates to a portable device comprising a receiver according to the second aspect, wherein the portable device is selected from the group consisting of: hearing devices, hearables and earplugs.

### BRIEF DESCRIPTION OF THE DRAWINGS

The present invention will now be described in further details with reference to the accompanying figures, wherein
Fig. 1 shows a controllable micro acoustic valve in an open state,
Fig. 2 shows a controllable micro acoustic valve in a closed state,
Figs. 3a, 3b and 3c show the base plate, the upper yoke and the lower yoke, respectively, of the controllable micro acoustic valve,
Figs. 4a and 4b show an acoustic receiver including a controllable valve,
Fig. 5 shows an ear plug comprising a receiver assembly including a controllable valve,
Fig. 6 shows SPL curves for various receiver scenarios, and
Fig. 7 shows a cross-sectional view of an embodiment of the present invention,
Fig. 8 shows 3D perspectives of the embodiment of Fig. 7,
Fig. 9 shows a close-up of the spider applied in the embodiment of Fig. 7, and
Fig. 10 shows a cross-sectional view of yet another embodiment of the present invention.

While the invention is susceptible to various modifications and alternative forms specific embodiments have been shown by way of examples in the drawings and will be described in details herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

In its broadest aspect the present invention relates to an arrangement for maintaining a venting opening of a micro acoustic valve or a receiver in a closed state using magnetic forces. An immediate advantage of using magnetic forces for maintaining a venting opening in a certain state relates to energy saving in that electrical power is not required for maintaining the venting opening in such a certain state, such as in a closed state.

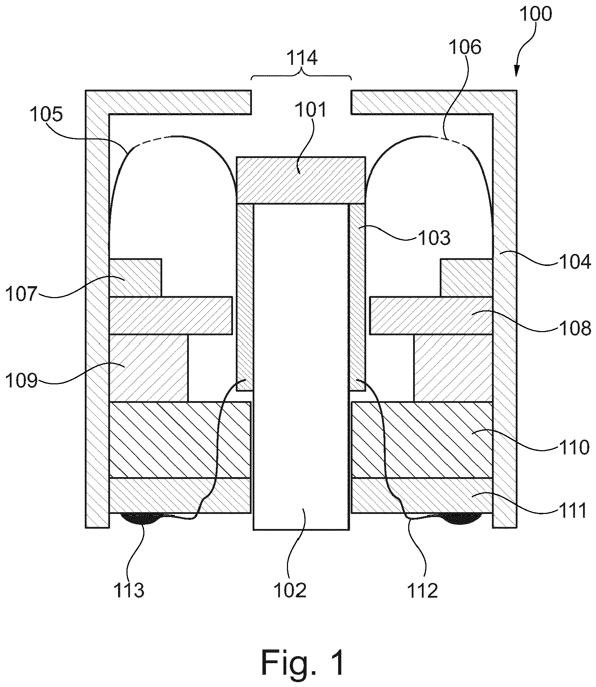

Referring now to Fig. 1 a micro acoustic valve 100 in an open state is depicted. The overall dimensions of the micro acoustic valve may vary, but typically the diameter is around 3 mm and the height is also around 3 mm. The micro acoustic valve 100 comprises a disc-shaped permanent magnet 101 arranged on top of a soft iron bobbin 102 around which a moving coil 103 is wounded. The disc-shaped permanent magnet typically has a diameter of around 1 mm and a height of around 0.3 mm. The moving coil 103 is electrically connected to solder bumps 113 via flexible wires 112. The micro acoustic valve further comprises a soft iron valve casing 104 having a venting opening 114 arranged therein.

The moveable structure in the form of the permanent magnet 101, the bobbin 102 and the moving coil 103 is suspended in a suspension member 105 which comprises one or more permeable openings 106 so that air is allowed to pass the suspension member 105 when the micro acoustic valve is in an open state as shown in Fig. 1. The one or more permeable openings 106 may be provided by various means, such as laser cutting. The suspension member 105 is secured to a ring-shaped support structure 107.

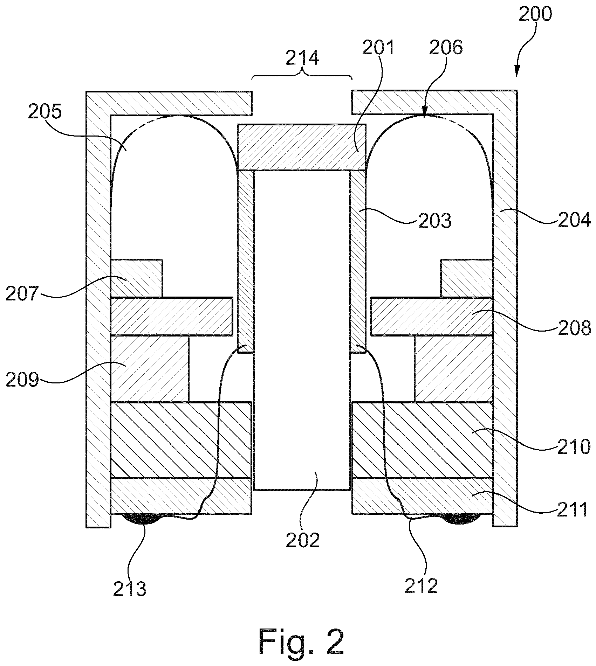

The suspension member 105 further allows that the disc-shaped permanent magnet 101, the bobbin 102 and the moving coil 103 may move along the longitudinal direction the bobbin 102 as illustrated in Fig. 2 where the micro acoustic valve is in a closed state, i.e. air is not allowed to pass through the micro acoustic valve. The closed state of the micro acoustic valve will be discussed in further details in relation to Fig. 2.

The micro acoustic valve further comprises a base plate 111 secured to the valve casing 104. The base plate 111 has an opening within which opening the bobbin 102 is allowed to travel in a controlled manner along its longitudinal direction.

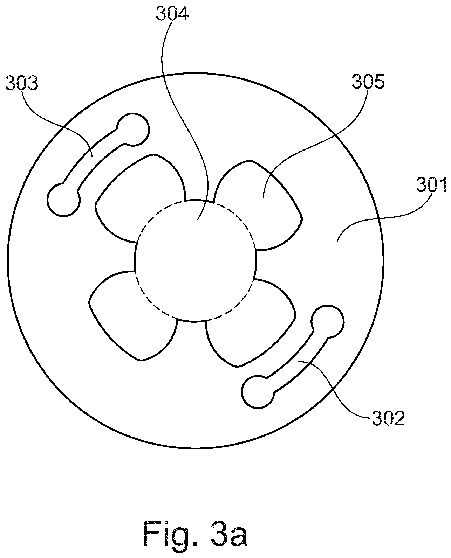

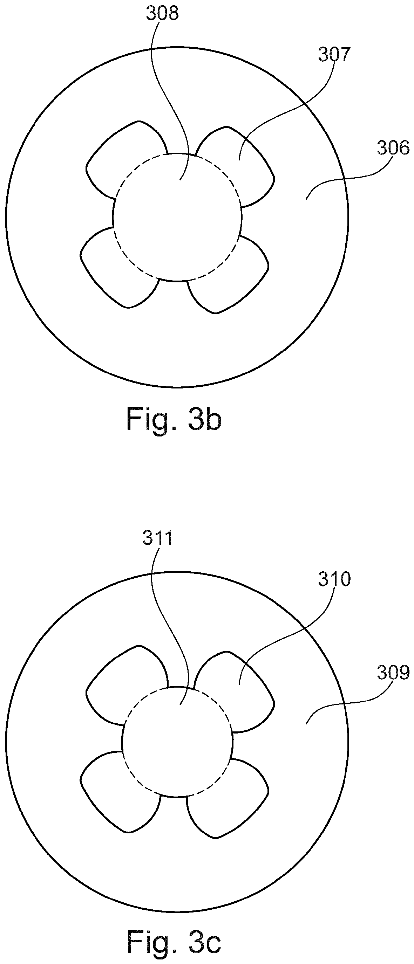

As illustrated in Fig. 3a the base plate 301 comprises a total of four permanent openings 305 around the opening 304 in which the bobbin is allowed to travel. The four permanent openings 305 ensure that air may pass through the micro acoustic valve when it is in an open state. Moreover, two solder bumps 302, 303 are provided on the base plate 301 so that the micro acoustic valve may be electrically connected to external drive units. Fig. 3b shows the upper soft iron yoke 306 (items 108, 208 in Figs. 1 and 2, respectively) which also comprises a total of four permanent openings 307 around the opening 308 in which the bobbin and the moving coil are allowed to travel. In order to make place for the moving coil the diameter of the opening 308 is larger than the diameter of the opening 304 in the base plate 301, cf. Fig. 3a. Fig. 3c shows the lower soft iron yoke 309 (items 110, 210 in Figs. 1 and 2, respectively) which also comprises a total of four permanent openings 310 around the opening 311 in which the bobbin is allowed to travel. The diameter of the opening 311 is similar to the diameter of the opening 304 in the base plate 301, cf. Fig. 3a. The permanent openings 305, 307, 310 in the base plate, the upper yoke and the lower yoke should be aligned in order to form a permanent air passage on the outside of the bobbin/moving coil.

Returning to Fig. 1 a substantially ring-shaped permanent magnet 109 is sandwiched between two soft iron yokes 108, 110 whereby the moving coil 103 is positioned in a permanent magnetic field.

In order to close the micro acoustic valve 200, cf. Fig. 2, an electric pulse of a certain amplitude, polarity and time period is applied to the moving coil 203 whereby the moveable structure in the form of the disc-shaped permanent magnet 201, the bobbin 202 and the moving coil 203 is displaced in the direction of the venting opening 214. At a certain displacement the suspension member 205 encounters or hits the upper portion of the valve casing 204 as illustrated with point 206. In this position the micro acoustic valve is in a closed state as the suspension member 205 forms a seal between the disc-shaped permanent magnet 201 and the upper part of the valve casing 204.

It is advantageous that the magnetic forces between the disc-shaped permanent magnet 201 and the soft iron valve casing 204 is sufficient to keep the moveable structure in the form of the disc-shaped permanent magnet 201, the bobbin 202 and the moving coil 203 in the displaced position shown in Fig. 2, i.e. keeping the micro acoustic valve in a closed state. In order to open the micro acoustic valve 200 an electric pulse of a certain amplitude and time period is applied to the moving coil 203. The polarity of the electric pulse is typically opposite compared to the polarity used for closing the valve. In addition, the amplitude and time period used for closing the valve may be different compared to the amplitude and time period used for opening the valve.

Similar to Fig. 1 a substantially ring-shaped permanent magnet 209 is sandwiched between two soft iron yokes 208, 210. Moreover, a support structure for the suspension member 207, a base plate 211 with solder bumps 213, and wires 212 are provided.

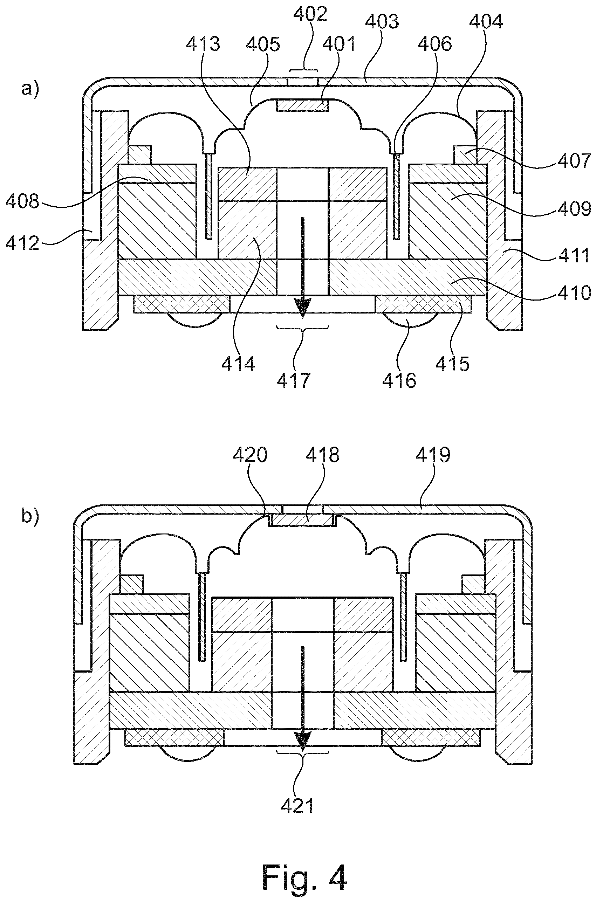

Fig. 4 shows an embodiment of the present invention where a disc-shaped permanent magnet 401, 418 is secured to a moveable diaphragm 405 of a receiver having a venting opening 402 in the receiver shield 403, 419. In Fig. 4a air is allowed to pass through this venting opening 402, whereas the venting opening is blocked in Fig. 4b. A more detailed discussion of the embodiment shown in Fig. 4 is given below.

Fig. 4a shows a receiver comprising a moveable diaphragm 405 suspended in a suspension member 404 which is secured to support member 407. A moving coil 406 is secured to the moveable diaphragm 405 and the suspension member 404 in a manner so that the moving coil 406 also extends into an air gap being defined by yokes 408, 413 and permanent magnets 409, 414 which are arranged on the base plate 410. Contrary to traditional receivers the sound output from the receiver shown in Figs. 4a and 4b are provided via output ports 417, 421, respectively, on the back-side of the receiver. Moreover, a PCB 415 with solder bumps 416 is secured to the base plate 410. The receiver further comprises a frame structure 411 to which the soft iron shield 403 is attached using proper securing techniques. As depicted in Fig. 4a one or more acoustic load channels 412 are provided in the frame structure 411.

In Fig. 4a the moveable diaphragm 405 and the suspension member 404 are allowed to move freely in response to electrical signals provided to the moving coil 406 as the disc-shaped permanent magnet 401 does not interact with the soft iron shield 403. Similar to the micro acoustic valve shown in Figs. 1 and 2 the venting opening 402 is blocked by applying an electric pulse of a certain amplitude, time period and polarity to the moving coil 406 whereby the moveable diaphragm 405 including the disc-shaped permanent magnet 401 is moved in the direction of the receiver shield 403. The venting opening 402 may be reopened by applying an electric pulse with a certain amplitude, time period and an opposite polarity to the moving coil 406. The value of the amplitude and the time period of the electric pulse opening the venting valve 402 may be different from the value of the amplitude and the time period of the electric pulse closing the venting opening 402.

In Fig. 4b, where the venting opening is closed, the disc-shaped permanent magnet 418 is magnetically coupled to the soft iron shield 419. Moreover, the moveable diaphragm (item 405 in Fig. 4b) forms an acoustic seal to the soft iron shield 419 at point 420. Thus, in Fig. 4b the venting opening of the soft iron shield 419 is blocked. As a consequence the middle section of the moveable diaphragm is fixated to the receiver shield 419 while portions of the moveable diaphragm around this middle section is allowed to move and thereby generate sound pressure in response to electrical signals applied to the moving coil. The sound output leaves the receiver at the opening 421.

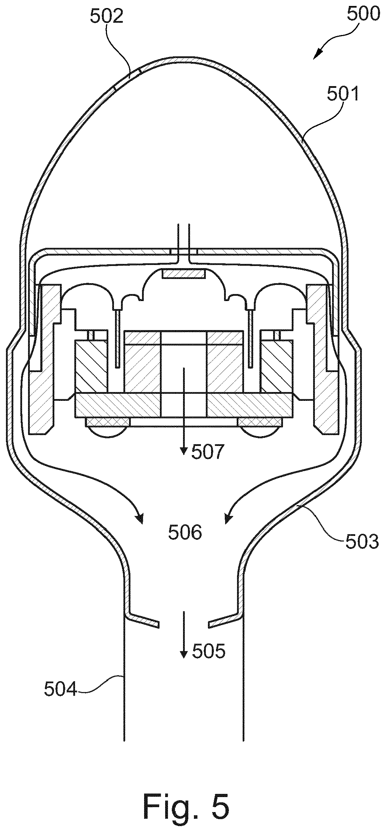

Fig. 5 shows an ear plug 500 comprising a receiver of the type shown in Fig. 4. The ear plug 500 further comprises a first ear plug housing 501 having a venting opening 502 facing the outside of the ear, and a second ear plug housing 503 having sound output port 505 facing the eardrum (not shown) at the end of the ear canal 504. The second ear plug housing 503 is thus adapted to be inserted into the ear canal 504. The receiver of the ear plug shown in Fig. 5 is in an open state, i.e. the output of the receiver 507 is acoustically coupled or mixed with the air outside of the ear via a number of load channels as indicated by the arrows 506.

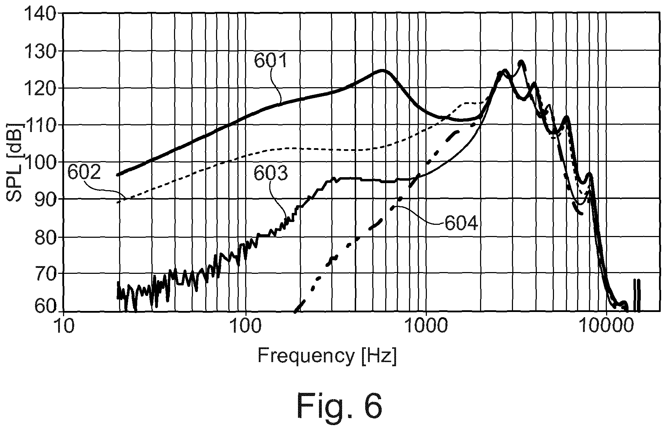

Fig. 6 shows a series of simulations of the sound pressure level (SPL) in various scenarios applying an ear plug depicted in Fig. 5. Curve 601 simulates the SPL at the ear drum in the scenario where the venting valve of the receiver is in an open state and where the ear plug housing 503 seals perfectly with the ear canal, i.e. there is no acoustic leak around the ear plug housing 503. If the venting valve of the receiver instead is in a closed state the SPL at the ear drum will be as illustrated by curve 603, i.e. with a significant lower low frequency response. Curve 602 simulates the SPL at the ear drum in case the venting valve of the receiver is in an open state and there is a small acoustic leak around the ear plug housing 503. If the venting valve is closed the SPL at the ear drum will be as illustrated by curve 604, i.e. again with a significant lower low frequency response.

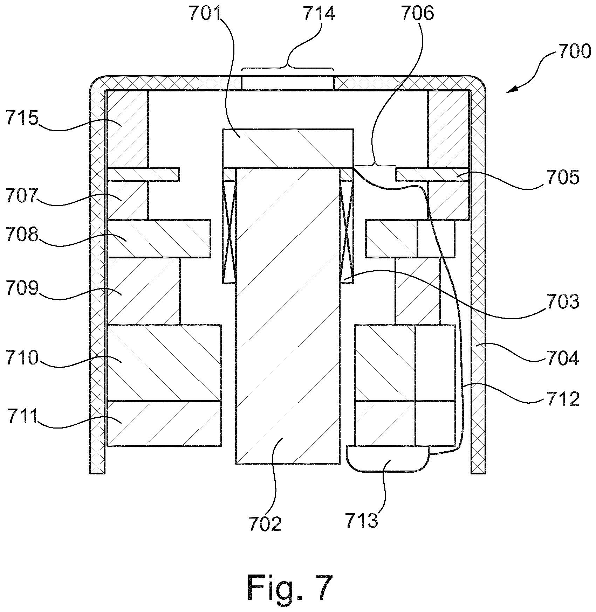

Referring now to Fig. 7 an embodiment 700 of the micro acoustic valve in an open state is depicted. The micro acoustic valve shown in Fig. 7 may be considered a mechanical bilateral latch. As addressed above the overall dimensions of the micro acoustic valve may vary, but typically the diameter is around 3 mm and the height is also around 3 mm. The micro acoustic valve 700 comprises a disc-shaped permanent magnet 701 arranged on top of a soft iron bobbin 702 around which a moving coil 703 is wounded. The disc-shaped permanent magnet 701 typically has a diameter of around 1 mm and a height of around 0.3 mm. The upper surface of the disc-shaped permanent magnet 701 is coated with a non-magnetisable material, such as a polymer-based coating, layer or gasket. The non-magnetisable material ensures that the disc-shaped permanent magnet 701, when the micro acoustic valve 700 is in a closed state, does not abut directly to the inner side of the soft iron valve casing 704 around the venting opening 714. Moreover, non-magnetisable material forms an acoustic seal between the disc-shaped permanent magnet 701 and the soft iron valve casing 704 when the micro acoustic valve 700 is in a closed state. The moving coil 703 is electrically connected to solder bumps 713 via flexible wires 712. The micro acoustic valve further comprises a soft iron valve casing 704 having a venting opening 714 arranged therein.

The moveable structure in the form of the disc-shaped permanent magnet 701, the bobbin 702 and the moving coil 703 are suspended in a resilient spider 705 which comprises one or more openings 706 so that air is allowed to pass the resilient spider 705 when the micro acoustic valve is in an open state as shown in Fig. 7. The resilient spider 705 is positioned between two spacers 707, 715 which may be made of brass. It is advantageous that the resilient spider 705 allows that the disc-shaped permanent magnet 701, the bobbin 702 and the moving coil 703 may only move along the longitudinal direction the bobbin 702. The resilient spider 705 thus prevents transverse movements of the moveable structure, i.e. movement perpendicular to the longitudinal direction the bobbin 702.

The micro acoustic valve 700 further comprises a base plate 711 having an opening within which opening the bobbin 702 is allowed to travel in a controlled manner along its longitudinal direction. A permanent magnetic field is generated by a surrounding permanent magnet 709 sandwiched between two soft iron yokes 708, 710. As illustrated in the right hand side of Fig. 7 the surrounding permanent magnet 709, the two soft iron yokes 708, 710 and the base plate 711 are shaped in a manner that allows that the wires 712 from the moving coil 703 may be connected to the solder bumps 713.

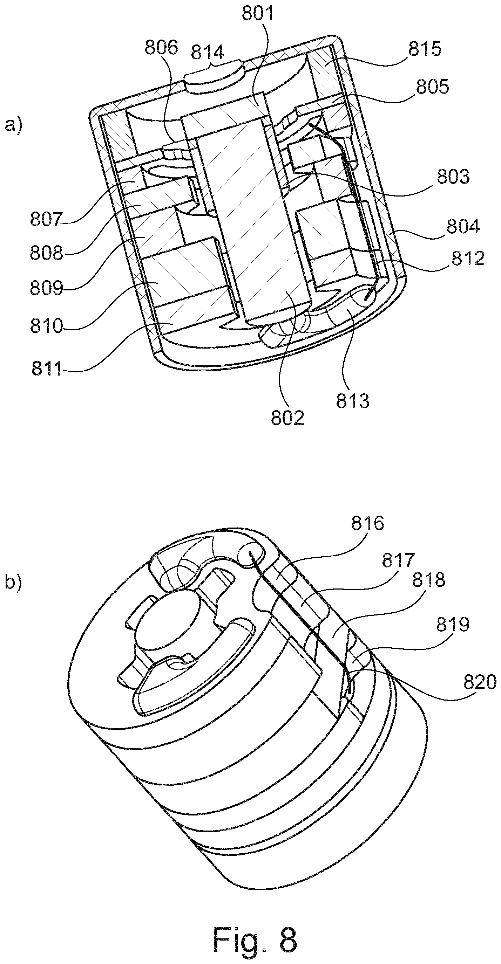

Fig. 8a shows a 3D perspective of the embodiment also shown in Fig. 7. Thus, the micro acoustic valve of Fig. 8a comprises a disc-shaped permanent magnet 801 arranged on top of a soft iron bobbin 802 around which a moving coil 803 is wounded. The moving coil 803 is electrically connected to solder bumps 813 via flexible wires 812. The micro acoustic valve further comprises a soft iron valve casing 804 having a venting opening 814 arranged therein. The disc-shaped permanent magnet 801, the bobbin 802 and the moving coil 803 are suspended in the resilient spider 805 which comprises one or more openings 806 so that air is allowed to pass the resilient spider 805 when the micro acoustic valve is in an open state. The resilient spider 805 is positioned between two brass spacers 807, 815. The resilient spider 805 only allows movements along the longitudinal direction the bobbin 802. The micro acoustic valve further comprises a base plate 811 having an opening for the bobbin 802. A permanent magnetic field is generated by the surrounding permanent magnet 809 sandwiched between two soft iron yokes 808, 810.

As illustrated in Fig. 8b the surrounding permanent magnet 818, the two soft iron yokes 817, 819 and the base plate 816 are shaped in a manner that allows that the wires 820 from the moving coil may be connected to the solder bumps. It should be noted that the micro acoustic valve is illustrated upside down in Fig. 8b.

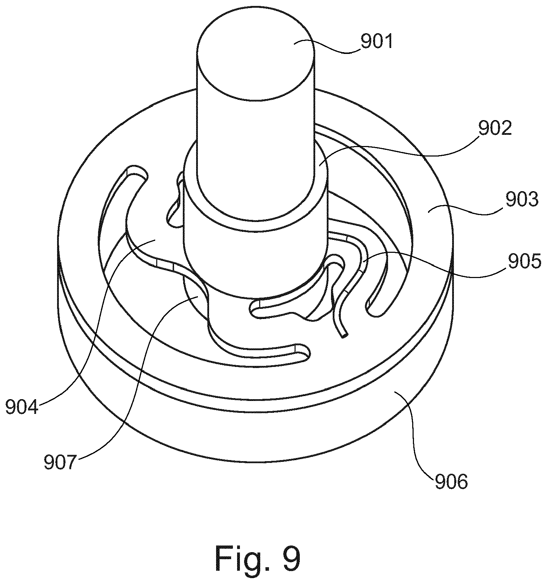

Fig. 9 shows a close-up of the resilient spider 903, 904 to which the bobbin 901, the disc-shaped permanent 907 and the moving coil 902 are secured. As seen the in Fig. 9 the resilient spider comprises a frame portion 903 secured to a spacer 906. Moreover, the resilient spider comprises a resilient portion 904 secured to or integrated with the frame portion 903. The resilient portion involves four resilient leg portions and a central ring portion to which central ring portion the bobbin 901, the disc-shaped permanent magnet 907 and the moving coil 902 are secured. Due to the resilient properties of in particular the four resilient leg portions, the bobbin 901, the disc-shaped permanent magnet 907 and the moving coil 902 are moveable relative to the frame portion 903 when a current is passed through the moving coil 902. As previously addressed the resilient spider 903, 904 only allows movements along the longitudinal direction the bobbin 901. As seen in Fig. 9 one or more of the four resilient leg portions may be used to carry or support at least part of the wire to/from the moving coil 902.

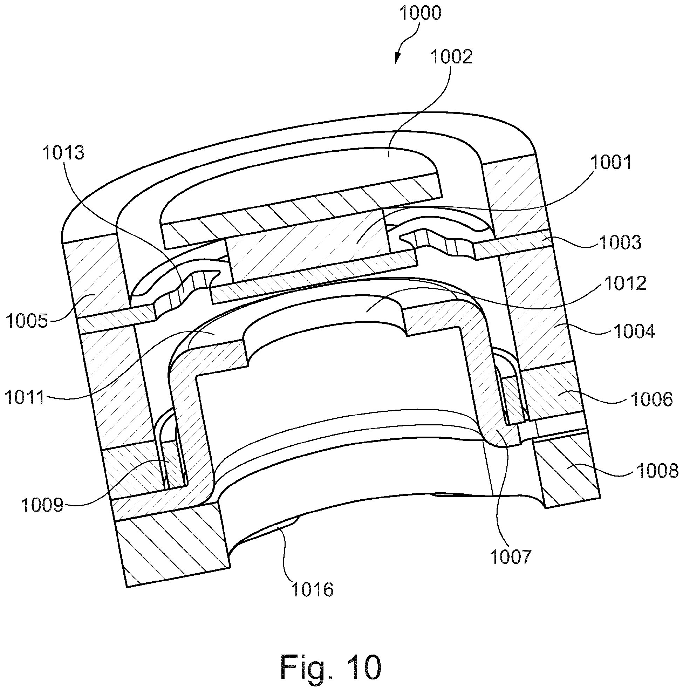

Fig. 10 shows yet another embodiment 1000 of a micro acoustic valve. The micro acoustic valve shown in Fig. 10 may also be considered a mechanical bilateral latch. Compared to the previous embodiments the embodiment depicted in Fig. 10 has a static coil 1009 whereas the previous embodiments rely on a moving coil. When a drive signal is passed through the static coil 1009 the micro acoustic valve may be either closed or opened. Thus, the micro acoustic valve only requires power when its state is to be altered. With reference to Fig. 10 the micro acoustic valve comprises a PCB 1008 having an appropriate number of solder bumps 1016 arranged thereon. A centre yoke 1007 having a top portion 1011 with a through-going air passage 1012 is arranged on the PCB 1008. The before-mentioned static coil 1009 is arranged around a lower portion of the centre yoke 1007. Moreover, a stacked arrangement including a bottom ring yoke 1006 (soft iron), a permanent ring magnet 1004, a resilient spider 1003 (stainless steel) and a top ring yoke 1005 (soft iron) is arrangement on top of the outer branches of the centre yoke 1007. The resilient spider 1003 has a movable centre portion due to the openings 1013 which also form one or more air passages. A disc shaped magnet 1001 and a top disc yoke 1002 are secured to the centre and thereby moveable portion of the resilient spider 1003. In an alternative implementation the permanent ring magnet 1004 may be replaced by a soft iron ring-shaped structure.

In order to close the micro acoustic valve a current pulse with a certain polarity is applied to the static coil 1009. The static coil 1009 will then via magnetic forces in the magnetic system involving the various yokes and the permanent ring magnet 1004 move the top disc yoke 1002 and the disc shaped magnet 1001 towards the upper surface of the top portion 1011 of the centre yoke 1007 and magnetically stick to this surface whereby the micro acoustic valve is acoustically closed, i.e. there is no passages from top to bottom through the valve.

Similarly, in order to open the micro acoustic valve a current pulse having an opposite polarity is applied to the static coil 1009. The static coil 1009 will then via oppositely arranged magnetic forces in the magnetic system release the top disc yoke 1002 and the disc shaped magnet 1001 from the upper surface of the top portion 1011 of the centre yoke 1007 whereby the micro acoustic valve is acoustically opened from top to bottom. The intrinsic spring force in the resilient spider 1003 will maintain the top disc yoke 1002 and the disc shaped magnet 1001 as depicted in Fig. 10.

## Claims

1. A micro acoustic valve comprising
1) a moveable first member, and
2) a coil configured to bring the moveable first member in the vicinity of a second member in order to close the valve, or release the moveable first member from the second member in order to open the valve,
wherein the valve is maintained in a closed state by magnetic forces between the moveable first member and the second member.

2. A micro acoustic valve according to claim 1, wherein the moveable first member comprises a permanent magnet, and wherein the second member comprises a soft iron material.

3. A micro acoustic valve according to claim 1 or 2, wherein the moveable first member is suspended in a flexible member, such as a suspension member or a resilient spider.

4. A micro acoustic valve according to claim 3, wherein the flexible member comprises an air passage where air is allowed to pass when the valve is in an open state.

5. A micro acoustic valve according to any of the preceding claims, wherein the coil forms part of the moveable first member.

6. A micro acoustic valve according to claim 5, wherein the moveable first member further comprises a bobbin secured to the permanent magnet, and wherein the coil is positioned around at least part of said bobbin.

7. A micro acoustic valve according to claim 5 or 6, wherein the flexible member comprises a suspension member, and wherein at least part of the suspension member forms an acoustic seal between moveable first member and the second member when the valve is in a closed position.

8. A micro acoustic valve according to any of claims 5-7, wherein the second member forms part of a valve casing, and wherein the moveable first member essentially blocks an opening in the valve casing when the micro acoustic valve is in a closed position.

9. A micro acoustic valve according to any of claims 1-4, wherein the coil is arranged around at least part of a static centre yoke.

10. A micro acoustic valve according to claim 9, wherein the second member forms part of the static centre yoke.

11. A micro acoustic valve according to claim 10, wherein the moveable first member essentially blocks an opening in the static centre yoke when the micro acoustic valve is in a closed position.

12. A micro acoustic valve according to any of the preceding claims, wherein the valve has an outer diameter being smaller than 6 mm, such as smaller than 5 mm, such as smaller than 4 mm, such as around 3 mm, and a length being shorter than 6 mm, such as shorter than 5 mm, such as shorter than 4 mm, such as around 3 mm.

13. A receiver comprising
1) a moveable diaphragm having a permanent magnet secured thereto or integrated therewith, and
2) a moving coil configured to bring at least part of the moveable diaphragm in the vicinity of a receiver casing in order to block a venting opening in the receiver casing, or bring at least part of the moveable diaphragm away from the receiver casing in order to allow air to pass through the venting opening in the receiver casing,
wherein the venting opening in the receiver casing is maintained in a blocked state by magnetic forces between the permanent magnet of the moveable diaphragm and the receiver casing.

14. A receiver according to claim 13, wherein at least part of the moveable diaphragm forms an acoustic seal with the receiver casing while the venting opening in said receiver casing is blocked.

15. A portable device comprising a receiver according to claim 13 or 14, wherein the portable device is selected from the group consisting of: hearing devices, hearables and ear plugs.
